# EUROPÄISCHE PATENTSCHRIFT

(11) **EP 2 383 909 B1**
(45) Veröffentlichungstag und Bekanntmachung des Hinweises auf die Patenterteilung: **27.08.2014**
(21) Anmeldenummer: 11163879.7
(22) Anmeldetag: 27.04.2011
(51) Int. Cl.: H04B 10/116

(54) **System und Verfahren zur bidirektionalen Kommunikation mit LED-Leuchten**
System and method for bidirectional communication with LED lights
Système et procédé de communication bidirectionnelle doté de lampes à DEL

(30) Priorität: 27.04.2010 DE 102010028249
(43) Veröffentlichungstag der Anmeldung: 02.11.2011
(73) Patentinhaber: Zumtobel Lighting GmbH, 6850 Dornbirn (AT)
(72) Erfinder: Böhnel, Michael, 6850 Dornbirn (AT)
(74) Vertreter: Thun, Clemens

(56) Entgegenhaltungen:
- WO-A1-99/49446
- WO-A2-02/25842
- US-A- 4 856 090

## Beschreibung

Die Erfindung betrifft ein Beleuchtungssystem und ein Verfahren zur Steuerung von Beleuchtungssystemen.

In Beleuchtungssystemen mit einer Vielzahl von Beleuchtungseinrichtungen sind herkömmlich unidirektionale Bussysteme, wie z.B. DMX (digital multiplex) installiert. Eine Kommunikation über solche Bussysteme findet lediglich in einer Richtung statt. So können Informationen lediglich von einer Steuereinrichtung an eine Beleuchtungseinrichtung übermittelt werden. Ein Rückkanal ist nicht vorgesehen. So zeigt die DE 10 2008 056 164 A1 ein exemplarisches DMX-Beleuchtungssystem.

Nachteilhaft an solchen Beleuchtungssystemen ist, dass die angeschlossenen Beleuchtungseinrichtungen keine Rückmeldung bezüglich ihres aktuellen Status geben können.

Zur Lösung dieses Problems wurden bidirektionale Systeme, z.B. Dali oder RDM entwickelt. Nachteilhaft hieran ist jedoch, dass eine Vielzahl von installierten unidirektionalen Systemen nicht ohne Weiteres auf bidirektionale Kommunikation umgestellt werden können. So müssten hierfür sämtliche Systemkomponenten ausgetauscht werden.

Darüber hinaus ist ein System zur kontaktlosen optischen Datenübertragung bekannt. Dabei wird bidirektional zwischen zwei Teilnehmern moduliertes Licht ausgetauscht, welches die zu übertragenden Daten beinhaltet. So zeigt die DE 10 2004 044 456 A1 ein solches Kommunikationssystem.

Ein weiteres Beleuchtungssystem nach dem Stand der Technik ist aus der WO-A-2006/111934 bekannt.

Auch aus der WO 02/25842 A2 ist ein System mit Beleuchtungseinrichtungen bzw. multifunktionalen Vorrichtungen bekannt, bei dem LED-Leuchtmittel zur drahtlosen Übermittlung von Daten in ihrer Beleuchtungsintensität variiert werden.

Der Erfindung liegt die Aufgabe zu Grunde, ein Beleuchtungssystem und ein Verfahren zur Steuerung von Beleuchtungssystemen zu schaffen, welche eine bidirektionale Kommunikation mit Beleuchtungseinrichtungen in einem Beleuchtungssystem ermöglichen und gleichzeitig lediglich einen geringen Aufwand ausgehend von einem bereits installierten unidirektional kommunizierenden Beleuchtungssystem erfordern.

Die Aufgabe wird erfindungsgemäß für das Beleuchtungssystem durch die Merkmale des unabhängigen Anspruchs 1 und für das Verfahren durch die Merkmale des unabhängigen Anspruchs 8 gelöst. Vorteilhafte Weiterbildungen sind Gegenstand der hierauf rückbezogenen Unteransprüche.

Ein erfindungsgemäßes Beleuchtungssystem weist eine Beleuchtungseinrichtung, eine Steuerungsvorrichtung zur Steuerung der Beleuchtungseinrichtung und ein unidirektionales Bussystem auf, wobei die Beleuchtungseinrichtung über ein Leuchtmittel und eine Steuerungseinrichtung verfügt. Bei dem Leuchtmittel handelt es sich z.B. um eine oder mehrere LEDs. Die Steuerungseinrichtung ist mit dem unidirektionalen Bussystem verbindbar. Es können lediglich Informationen von dem Bussystem an die Steuerungseinrichtung übertragen werden. Die Steuerungseinrichtung ist dabei zum Empfangen und Verarbeiten von Steuersignalen über das Bussystem eingerichtet. Die Steuerungseinrichtung steuert die Abgabe von Licht durch das Leuchtmittel. So kann z.B. die Lichtstärke eingestellt werden. Die Steuerungseinrichtung steuert das Leuchtmittel derart, dass das abgegebene Licht moduliert ist. Die Steuerungseinrichtung überträgt durch die Modulation des Lichts Nachrichten. So ist eine Rückmeldung durch die Beleuchtungseinrichtung möglich, ohne das unidirektionale Bussystem modifizieren zu müssen. Die Steuerungsvorrichtung verfügt über einen Empfänger, eine Verarbeitungseinrichtung und einen Sender, wobei der Empfänger das modulierte Licht von der Beleuchtungseinrichtung empfängt und die Verarbeitungseinrichtung die in der Modulation des Lichts enthaltenen Nachrichten verarbeitet, und wobei die Verarbeitungseinrichtung Steuersignale erzeugt und der Sender diese zumindest mittelbar über das Bussystem an die Beleuchtungseinrichtung sendet. Dabei ist vorgesehen, dass es sich bei den in der Modulation des Lichts enthaltenen Nachrichten um ein Rückmeldesignal als Antwort auf die Steuersignale handelt.

Die von der Verarbeitungseinrichtung erzeugten Steuersignale sind vorzugsweise Statusanfragen oder Konfigurationssignale und die in der Modulation des Lichts enthaltenen Nachrichten sind vorzugsweise Statusnachrichten als Antwort auf die Statusanfragen und/oder Nachrichten zur Bestätigung der empfangenen Steuersignalen und/oder Konfigurationsnachrichten als Antwort auf die Konfigurationssignale.

Vorteilhafterweise ist das Steuersignal eine Betriebsadress-Zuweisung.

Die Modulation des abgegebenen Lichts ist bevorzugt eine Amplitudenmodulation oder eine Frequenzmodulation oder eine Pulsweitenmodulation. So ist eine sichere Übertragung der Nachrichten möglich.

Der Empfänger weist vorteilhafterweise eine Richtcharakteristik auf. Der Empfänger empfängt, wenn er auf eine Beleuchtungseinrichtung ausgerichtet ist, bevorzugt weitgehend lediglich von dieser Beleuchtungseinrichtung abgegebenes Licht. So ist sichergestellt, dass gleichzeitig mit genau einer Beleuchtungseinrichtung kommuniziert wird.

Der Sender der Steuerungsvorrichtung ist vorteilhafterweise über eine Kabelverbindung oder über eine Funkverbindung oder über eine Infrarotverbindung mit dem Bussystem verbunden. So ist ein sicherer und flexibler Anschluss möglich.

Das Beleuchtungssystem weist dabei bevorzugt mehrere Beleuchtungseinrichtungen auf. Die Modulation des Lichts beinhaltet vorteilhafterweise Informationen, welche anzeigen, welche Beleuchtungseinrichtung das Licht abgegeben hat. So können in Räumen mit mehreren Beleuchtungseinrichtungen diese gleichzeitig gesteuert werden.

Bei einem erfindungsgemäßen Verfahren zur Steuerung von Beleuchtungssystemen beinhaltet das Beleuchtungssystem zumindest eine Beleuchtungseinrichtung, eine Steuerungsvorrichtung und ein ausschließlich unidirektionales Bussystem. Von der Steuerungsvorrichtung werden Steuersignale über das Bussystem an die Beleuchtungseinrichtung übertragen. Die Steuersignale werden von der Beleuchtungseinrichtung empfangen und verarbeitet. Moduliertes Licht wird von der Beleuchtungseinrichtung abgegeben. Die Modulation des Lichts beinhaltet dabei Nachrichten, wobei es sich bei den in der Modulation des Lichts enthaltenen Nachrichten um ein Rückmeldesignal als Antwort auf die Steuersignale handelt. Das modulierte Licht wird von der Steuerungsvorrichtung empfangen. Die Nachrichten werden von der Steuerungsvorrichtung verarbeitet. Eine bidirektionale Kommunikation ist so möglich, ohne das unidirektionale Bussystem zu modifizieren.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: ein Ausführungsbeispiel des erfindungsgemäßen Beleuchtungssystems, und
- Fig. 2: ein Ausführungsbeispiel des erfindungsgemäßen Verfahrens.

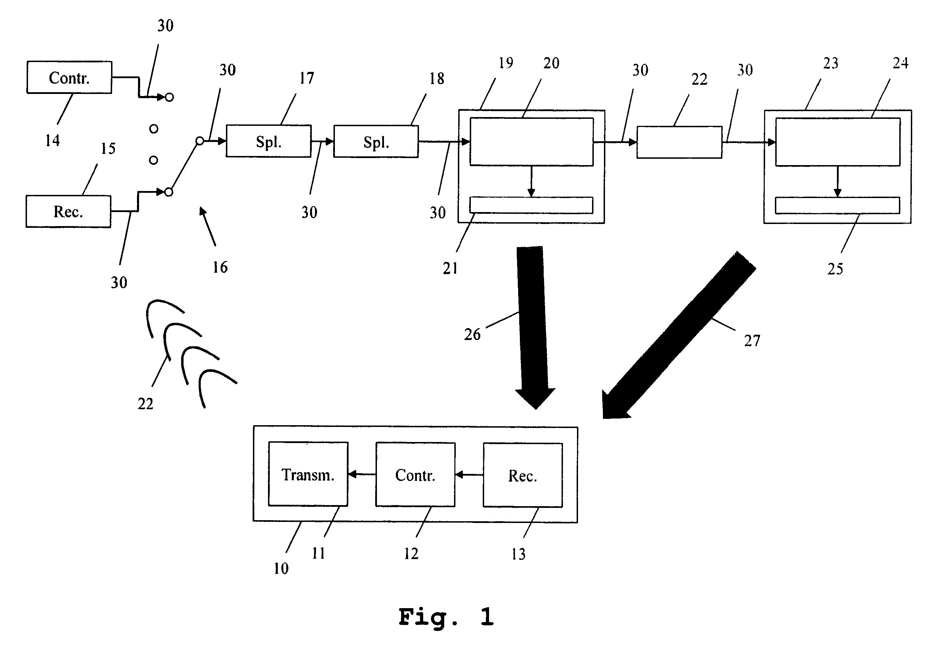

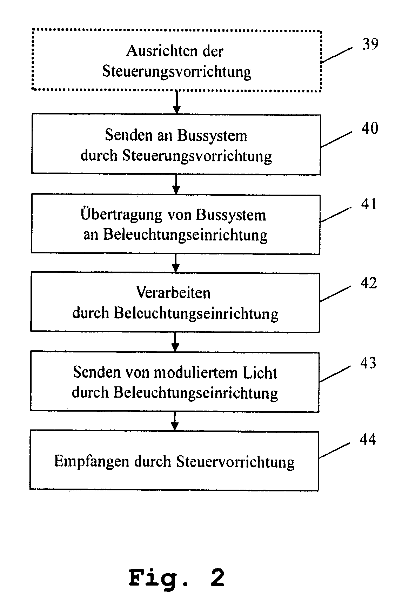

Zunächst werden anhand der Fig. 1 der Aufbau und die Funktionsweise der Beleuchtungseinrichtung, der Steuerungsvorrichtung und des Beleuchtungssystems erläutert. Mittels Fig. 2 wird anschließend die Funktionsweise des Steuerverfahrens gezeigt.

Fig. 1 zeigt ein Ausführungsbeispiel der Beleuchtungseinrichtung, der Steuerungsvorrichtung und des erfindungsgemäßen Beleuchtungssystems. Beleuchtungseinrichtungen 19, 23 beinhalten jeweils eine Steuerungseinrichtung 20, 24 und ein Leuchtmittel 21, 25. Die Beleuchtungseinrichtungen 19, 23 sind dabei mit einem unidirektionalen Bussystem 30 verbunden. Bei diesem Bussystem 30 kann es sich z.B. um ein DMX-Bussystem handeln. In dem hier dargestellten Beispiel handelt es sich um ein serielles Bussystem. D.h. sämtliche an das Bussystem angeschlossene Geräte sind in Serie geschaltet.

An das Bussystem 30 ist eine Vielzahl weiterer Geräte angeschlossen. Eine Steuerungseinrichtung 14 und ein Empfänger 15 sind mit unterschiedlichen Zweigen des Bussystems 30 verbunden. Die unterschiedlichen Zweige werden von einem Schalter 16 selektiert. Darüber hinaus sind Verteiler 17, 18 (splitter) mit dem Bussystem 30 verbunden. Neben den Beleuchtungseinrichtungen 19, 23 ist weiterhin eine herkömmliche Beleuchtungseinrichtung 22 mit dem Bussystem 30 verbunden.

Die Steuerungsvorrichtung 10 beinhaltet eine Verarbeitungseinrichtung 12, einen Sender 11 und einen Empfänger 13. Der Sender 11 und der Empfänger 13 sind dabei jeweils mit der Verarbeitungseinrichtung 12 verbunden.

Die Verarbeitungseinrichtung 12 der Steuerungsvorrichtung 10 erzeugt ein Steuersignal, welches sie an den Sender 11 überträgt. Der Sender 11 sendet das Steuersignal über eine Funkverbindung 22 an den Empfänger 15, welcher mit dem Bussystem 30 verbunden ist. Es handelt sich bei der Funkverbindung 22 um eine unidirektionale Verbindung. Anstatt einer Funkverbindung 22 kann auch eine drahtgebundene Verbindung oder eine Infrarotverbindung eingesetzt werden. Der Schalter 16 ist in diesem Ausführungsbeispiel so geschaltet, dass der Empfänger 15 mit dem Bussystem 30 verbunden ist.

Das von der Steuerungsvorrichtung 10 erzeugte Signal wird von dem Empfänger 15 über das Bussystem 30 übertragen. Es wird dabei von jedem an das Bussystem 30 angeschlossenen Gerät empfangen und erneut an das Bussystem 30 gesendet. Dies ist notwendig, da das Bussystem 30 kein durchgängiges System ist, sondern aus einer Reihe von einzelnen Abschnitten zwischen den Geräten besteht. In einem alternativen Ausführungsbeispiel ist das Bussystem durchgängig. Es ist dann nicht notwendig, das Signal durch jedes angeschlossene Gerät zu wiederholen. Das Steuersignal enthält dabei Informationen, welche sein Ziel angeben. Sobald ein Gerät erkennt, dass es das Ziel des Steuersignals ist, wird das Steuersignal nicht lediglich wiederholt, sondern durch das jeweilige Gerät verarbeitet. In diesem Ausführungsbeispiel sind die Beleuchtungseinrichtungen 19, 23 Ziel des ausgesendeten Steuersignals. Das Steuersignal wird somit von den Verarbeitungseinrichtungen 20, 24 der Beleuchtungseinrichtungen 19, 23 empfangen und verarbeitet.

Sofern das Steuersignal, wie in diesem Beispiel, eine Rückmeldung erfordert, steuern die Verarbeitungseinrichtungen 20, 24, die daran angeschlossenen Leuchtmittel 21, 25 derart an, dass diese mit einem Rückmeldesignal moduliertes Licht 26, 27 aussenden. Das modulierte Licht 26, 27 wird von dem Empfänger 13 der Steuerungsvorrichtung 10 empfangen und demoduliert. Das demodulierte Rückmeldungssignal wird von dem Empfänger 13 an die Verarbeitungseinrichtung 12 übertragen. Bei den Leuchtmitteln kann es sich um LEDs oder OLEDs oder Leuchtstofflampen oder herkömmliche Glühlampen handeln. Ein Einsatz jeglicher Leuchtmittel, welche eine Modulation des Lichts zulassen, ist möglich.

Bei dem ursprünglichen Steuersignal kann es sich z.B. um eine Statusanfrage handeln. Die Steuerungseinrichtungen 20, 24 ermitteln nach Erhalt dieses Steuersignals den Status ihrer jeweiligen Beleuchtungseinrichtung 19, 23 und steuern das jeweilige angeschlossene Leuchtmittel 21, 25 derart, dass diese Licht aussenden, welches mit einer entsprechenden Statusmeldung moduliert ist.

Alternativ kann es sich bei dem ursprünglichen Steuersignal um ein Konfigurationssignal handeln. Das Konfigurationssignal wird von den Steuerungseinrichtungen 20, 24 der Beleuchtungseinrichtungen 19, 23 empfangen. Die Beleuchtungseinrichtungen 19, 23 werden durch die Steuerungseinrichtungen 20, 24 entsprechend konfiguriert. Anschließend steuern die Steuereinrichtungen 20, 24 die jeweils angeschlossenen Leuchtmittel 21, 25 derart an, dass diese mit einer Bestätigungsmeldung moduliertes Licht 26, 27 aussenden.

Ein weiteres mögliches auszusendendes Steuersignal ist eine Betriebsadress-Zuweisung. Dabei weist die Verarbeitungseinrichtung 12 der Steuerungsvorrichtung 10 einer bestimmten Beleuchtungseinrichtung 19, 23 eine Betriebsadresse zu. Eine Betriebsadresse ist üblicherweise deutlich kürzer als herkömmlich bei der Herstellung vergebene Geräteadressen. Darüber hinaus können in der Betriebsadresse der Standort und weitere Informationen bezüglich der jeweiligen Beleuchtungseinrichtung codiert sein. Die Adresszuweisung wird von dem Sender 11 der Steuerungsvorrichtung 10 an den Empfänger 15 übertragen und von diesem über das Bussystem 30 an die Beleuchtungseinrichtungen 19, 23 gesendet. Die Steuerungseinrichtungen 20, 24 führen die Adresszuweisung aus. D.h. den Beleuchtungseinrichtungen 19, 23 wird die neue Betriebsadresse zugewiesen. Die Steuerungseinrichtungen 20, 24 steuern anschließend die angeschlossenen Leuchtmittel 21, 25 derart an, dass diese mit einem Bestätigungssignal moduliertes Licht 26, 27 aussenden, welches erneut von dem Empfänger 13 der Steuerungsvorrichtung 10 empfangen wird.

Es ist so möglich, in bestehenden Beleuchtungssystemen lediglich die Beleuchtungseinrichtungen auszutauschen, um eine bidirektionale Kommunikation zu ermöglichen. Das Bussystem und die weiteren angeschlossenen Geräte können unverändert bleiben, da der Rückkanal der bidirektionalen Kommunikation nicht über sie läuft.

Bei der Steuerungsvorrichtung 10 kann es sich um ein tragbares Gerät handeln. In diesem Fall verfügt die Steuerungsvorrichtung 10 weiterhin über eine Batterie oder einen Akku. Zur gezielten Auswahl einzelner zu steuernder Beleuchtungseinrichtungen kann der Empfänger 13 der Steuerungsvorrichtung 10 darüber hinaus über eine Richtcharakteristik verfügen. D.h. der Empfänger 13 wird auf die zu steuernde Beleuchtungseinrichtung ausgerichtet und empfängt dann lediglich von dieser ausgesendetes Licht 26, 27. Kann nicht sichergestellt werden, dass der Empfänger 13 lediglich das Licht 26, 27 einer einzelnen Beleuchtungseinrichtung 19,23 empfängt, ist es notwendig, den Ursprung des ausgesendeten modulierten Lichts 26, 27 sicherzustellen. Hierzu kann beispielsweise zu einem Zeitpunkt lediglich jeweils eine Beleuchtungseinrichtung 19, 23 Licht 26, 27 emittieren. Alternativ kann der Ursprung des modulierten Lichts 26, 27 in der Modulation angegeben sein. D.h. anhand der Modulation des ausgesendeten Lichts 26, 27 kann der Empfänger 13 bzw. die Verarbeitungseinrichtung 12 bestimmen, von welcher Beleuchtungseinrichtung 19, 23 das ausgesendete Licht 26, 27 stammt.

In Fig. 2 wird ein Ausführungsbeispiel des erfindungsgemäßen Steuerverfahrens gezeigt. In einem optionalen ersten Schritt wird der Empfänger einer Steuerungsvorrichtung auf eine zu steuernde Beleuchtungseinrichtung ausgerichtet. Dieser Schritt ist nur durchzuführen, wenn der Empfänger über eine ausreichende Richtcharakteristik verfügt und nur eine bestimmte Beleuchtungseinrichtung gesteuert werden soll. In einem zweiten Schritt sendet die Steuerungsvorrichtung ein Steuersignal an ein Bussystem. In einem anschließenden dritten Schritt 41 wird das Steuersignal von dem Bussystem an die zu steuernde Beleuchtungseinrichtung übertragen. Auch eine Übertragung an mehrere Beleuchtungseinrichtungen gleichzeitig ist möglich.

In einem folgenden vierten Schritt 42 wird das Steuersignal durch die Beleuchtungseinrichtung bzw. die Beleuchtungseinrichtungen verarbeitet. In einem fünften Schritt 43 wird moduliertes Licht durch die Beleuchtungseinrichtung bzw. die Beleuchtungseinrichtungen ausgesendet. Das modulierte Licht beinhaltet dabei ein Rückmeldungssignal. Wurden mehrere Beleuchtungseinrichtungen gesteuert, so senden diese entweder nacheinander das modulierte Licht aus, oder das ausgesendete modulierte Licht beinhaltet Informationen über seinen Ursprung. In einem abschließenden sechsten Schritt 44 wird das modulierte Licht durch die Steuerungsvorrichtung empfangen. Die Steuerungsvorrichtung demoduliert das Licht und verarbeitet das Rückmeldungssignal.

Die Erfindung ist nicht auf das dargestellte Ausführungsbeispiel beschränkt. Neben dem erwähnten DMX-Verfahren können auch andere Übertragungsverfahren in unidirektionalen Bussystemen eingesetzt werden. Alle vorstehend beschriebenen Merkmale oder in den Figuren gezeigten Merkmale sind im Rahmen der Erfindung beliebig vorteilhaft miteinander kombinierbar.

## Patentansprüche

1. Beleuchtungssystem mit zumindest einer Beleuchtungseinrichtung (19, 23), einer Steuerungsvorrichtung (10) zur Steuerung der Beleuchtungseinrichtung (19, 23) und einem unidirektionalen Bussystem (30),
wobei die Beleuchtungseinrichtung (19, 23) ein Leuchtmittel (21, 25) und eine Steuerungseinrichtung (20, 24) aufweist, wobei die Steuerungseinrichtung (20, 24) mit dem unidirektionalen Bussystem (30) verbindbar ist und zum Empfangen und Verarbeiten von Steuersignalen über das Bussystem (30) eingerichtet ist, und
wobei die Steuerungseinrichtung (20, 24) eine Abgabe von Licht (26, 27) durch das Leuchtmittel (21, 25) steuert und das Leuchtmittel (21, 25) derart steuert, dass das abgegebene Licht (26, 27) moduliert ist, wobei die Steuerungseinrichtung (20, 24) durch die Modulation des Lichts (26, 27) Nachrichten überträgt, und
wobei die Steuerungsvorrichtung (10) über einen Empfänger (13), eine Verarbeitungseinrichtung (12) und einen Sender (11) verfügt, wobei der Empfänger (13) das modulierte Licht (26, 27) von der Beleuchtungseinrichtung (19, 23) empfängt und die Verarbeitungseinrichtung (12) die in der Modulation des Lichts (26, 27) enthaltenen Nachrichten verarbeitet, und
wobei die Verarbeitungseinrichtung (12) Steuersignale erzeugt und der Sender (11) diese zumindest mittelbar über das Bussystem (30) an die Beleuchtungseinrichtung (19, 23) sendet
**dadurch gekennzeichnet,**
**dass** es sich bei den in der Modulation des Lichts (26, 27) enthaltenen Nachrichten um ein Rückmeldesignal als Antwort auf die Steuersignale handelt.

2. Beleuchtungssystem nach Anspruch 1,
**dadurch gekennzeichnet,**
**dass** die von der Verarbeitungseinrichtung (12) erzeugten Steuersignale Statusanfragen oder Konfigurationssignale sind und die in der Modulation des Lichts (26, 27) enthaltenen Nachrichten Statusnachrichten als Antwort auf die Statusanfragen und/oder Nachrichten zur Bestätigung der empfangenen Steuersignalen und/oder Konfigurationsnachrichten als Antwort auf die Konfigurationssignale sind.

3. Beleuchtungssystem nach einem der Ansprüche 1 bis 2,
**dadurch gekennzeichnet,**
**dass** das Steuersignal eine Betriebsadress-Zuweisung ist.

4. Beleuchtungssystem nach einem der Ansprüche 1 bis 3,
**dadurch gekennzeichnet,**
**dass** die Modulation des abgegebenen Lichts (26, 27) eine Amplitudenmodulation oder eine Frequenzmodulation oder eine Pulsweitenmodulation ist.

5. Beleuchtungssystem nach einem der Ansprüche 1 bis 4,
**dadurch gekennzeichnet,**
**dass** der Sender (11) der Steuerungsvorrichtung (10) über eine Kabelverbindung oder über eine Funkverbindung (22) oder über eine Infrarotverbindung mit dem Bussystem (30) verbunden ist.

6. Beleuchtungssystem nach einem der Ansprüche 1 bis 5,
**dadurch gekennzeichnet,**
**dass** das Beleuchtungssystem mehrere Beleuchtungseinrichtungen (19, 23) aufweist, und
**dass** die Modulation des Lichts (26, 27) Informationen enthält, welche anzeigen, welche Beleuchtungseinrichtung (19, 23) das Licht abgegeben hat.

7. Beleuchtungssystem nach Anspruch 6,
**dadurch gekennzeichnet,**
**dass** der Empfänger (13) der Steuerungsvorrichtung (10) eine Richtcharakteristik aufweist, und dass der Empfänger (13), wenn er auf eine der Beleuchtungseinrichtungen (19, 23) ausgerichtet ist, weitgehend lediglich von dieser Beleuchtungseinrichtung (19, 23) abgegebenes Licht (26, 27) empfängt.

8. Verfahren zur Steuerung von Beleuchtungssystemen,
wobei das Beleuchtungssystem über zumindest eine Beleuchtungseinrichtung (19, 23), eine Steuerungsvorrichtung (10) und ein unidirektionales Bussystem (30) verfügt, wobei von der Steuerungsvorrichtung (10) Steuersignale über das Bussystem (30) an die Beleuchtungseinrichtung (19, 23) übertragen werden,
wobei die Steuersignale von der Beleuchtungseinrichtung (19, 23) empfangen und verarbeitet werden,
wobei moduliertes Licht (26, 27) von der Beleuchtungseinrichtung (19, 23) abgegeben wird, und
wobei die Modulation des Lichts (26, 27) Nachrichten beinhaltet,
wobei das modulierte Licht (26, 27) von der Steuerungsvorrichtung (10) empfangen wird und die Nachrichten von der Steuerungsvorrichtung (10) verarbeitet werden.
**dadurch gekennzeichnet,**
**dass** es sich bei den in der Modulation des Lichts (26, 27) enthaltenen Nachrichten um ein Rückmeldesignal als Antwort auf die Steuersignale handelt.

9. Verfahren nach Anspruch 8,
**dadurch gekennzeichnet,**
**dass** die erzeugten Steuersignale Statusanfragen oder Konfigurationssignale sind und die in der Modulation des Lichts (26, 27) enthaltenen Nachrichten Statusnachrichten als Antwort auf die Statusanfragen und/oder Nachrichten zur Bestätigung der empfangenen Steuersignalen und/oder Konfigurationsnachrichten als Antwort auf die Konfigurationssignale sind.

10. Verfahren nach einem der Ansprüche 8 bis 9,
**dadurch gekennzeichnet,**
**dass** das Steuersignal eine Betriebsadress-Zuweisung ist.

11. Verfahren nach einem der Ansprüche 8 bis 10,
**dadurch gekennzeichnet,**
**dass** das Beleuchtungssystem mehrere Beleuchtungseinrichtungen (19, 23) aufweist, dass die Steuerungsvorrichtung (10) auf eine zu steuernde Beleuchtungseinrichtung (19, 23) ausgerichtet wird,
**dass** die Steuerungsvorrichtung (10) weitgehend lediglich von dieser Beleuchtungseinrichtung (19, 23) abgegebenes Licht (26, 27) empfängt, und
**dass** die Steuerungsvorrichtung (10) ausschließlich die Beleuchtungseinrichtung (19, 23) steuert, auf welche sie ausgerichtet ist.

12. Verfahren nach einem der Ansprüche 8 bis 11,
**dadurch gekennzeichnet,**
**dass** das Beleuchtungssystem mehrere Beleuchtungseinrichtungen (19, 23) aufweist, und
**dass** die Modulation des Lichts (26, 27) Informationen enthält, welche anzeigen, welche Beleuchtungseinrichtung (19, 23) das Licht abgegeben hat.

## Claims

1. A lighting system having at least one lighting device (19, 23), a control arrangement (10) for controlling the lighting device (19, 23) and a unidirectional bus system (30),
wherein the lighting device (19, 23) has a lighting means (21, 25) and a control device (20, 24), wherein the control device (20, 24) can be connected to the unidirectional bus system (30) and is set up to receive and process control signals by way of the bus system (30), and
wherein the control device (20, 24) controls an emission of light (26, 27) by the lighting means (21, 25) and controls the lighting means (21, 25) in such a way that the light (26, 27) that is emitted is modulated, wherein the control device (20, 24) transmits messages by means of the modulation of the light (26, 27), and
wherein the control arrangement (10) is provided with a receiver (13), a processing device (12) and a transmitter (11), wherein the receiver (13) receives the modulated light (26, 27) from the lighting device (19, 23), and the processing device (12) processes the messages contained in the modulation of the light (26, 27), and
wherein the processing device (12) generates control signals, and the transmitter (11) transmits these to the lighting device (19, 23) at least indirectly by way of the bus system (30),
**characterised in that**
the messages contained in the modulation of the light (26, 27) are a check-back signal as a response to the control signals.

2. A lighting system according to claim 1,
**characterised in that**
the control signals generated by the processing device (12) are status queries or configuration signals, and the messages contained in the modulation of the light (26, 27) are status messages as a response to the status queries and/or messages to acknowledge the control signals that are received and/or configuration messages as a response to the configuration signals.

3. A lighting system according to one of claims 1 to 2,
**characterised in that**
the control signal is an operating-address allocation.

4. A lighting system according to one of claims 1 to 3,
**characterised in that**
the modulation of the emitted light (26, 27) is an amplitude modulation or a frequency modulation or a pulse-width modulation.

5. A lighting system according to one of claims 1 to 4,
**characterised in that**
the transmitter (11) of the control arrangement (10) is connected to the bus system (30) by way of a cable connection or by way of a radio connection (22) or by way of an infrared connection.

6. A lighting system according to one of claims 1 to 5,
**characterised in that**
the lighting system has a plurality of lighting devices (19, 23), and
the modulation of the light (26, 27) contains items of information that indicate which lighting device (19, 23) has emitted the light.

7. A lighting system according to claim 6,
**characterised in that**
the receiver (13) of the control arrangement (10) has a directional characteristic, and the receiver (13), when it is aligned with one of the lighting devices (19, 23), receives light (26, 27) emitted largely just from this lighting device (19, 23).

8. Method for controlling lighting systems,
wherein the lighting system is provided with at least one lighting device (19, 23), a control arrangement (10) and a unidirectional bus system (30),
wherein control signals are transmitted by the control arrangement (10) by way of the bus system (30) to the lighting device (19, 23),
wherein the control signals are received and processed by the lighting device (19, 23),
wherein modulated light (26, 27) is emitted from the lighting device (19, 23), and
wherein the modulation of the light (26, 27) contains messages,
wherein the modulated light (26, 27) is received by the control arrangement (10), and the messages are processed by the control arrangement (10),
**characterised in that**
the messages contained in the modulation of the light (26, 27) are a check-back signal as a response to the control signals.

9. Method according to claim 8,
**characterised in that**
the control signals that are generated are status queries or configuration signals, and the messages contained in the modulation of the light (26, 27) are status messages as a response to the status queries and/or messages to acknowledge the control signals that are received and/or configuration messages as a response to the configuration signals.

10. Method according to one of claims 8 to 9,
**characterised in that**
the control signal is an operating-address allocation.

11. Method according to one of claims 8 to 10,
**characterised in that**
the lighting system has a plurality of lighting devices (19, 23),
the control arrangement (10) is aligned with a lighting device (19, 23) that is to be controlled,
the control arrangement (10) receives light (26, 27) emitted largely just from this lighting device (19, 23), and
the control arrangement (10) controls exclusively the lighting device (19, 23) with which it is aligned.

12. Method according to one of claims 8 to 11,
**characterised in that**
the lighting system has a plurality of lighting devices (19, 23), and
the modulation of the light (26, 27) contains items of information that indicate which lighting device (19, 23) has emitted the light.

## Revendications

1. Système d'éclairage doté d'au moins un dispositif d'éclairage (19, 23), d'un appareil de commande (10) servant à la commande du dispositif d'éclairage (19, 23) et d'un système de bus (30) unidirectionnel,
le dispositif d'éclairage (19, 23) comprenant un moyen d'éclairage (21, 25) et une installation de commande (20, 24), l'installation de commande (20, 24) pouvant être reliée au système de bus (30) unidirectionnel et étant agencée pour la réception et le traitement de signaux de commande par le biais du système de bus (30), et l'installation de commande (20, 24) commandant une émission de lumière (26, 27) par le moyen d'éclairage (21, 25) et commandant le moyen d'éclairage (21, 25) de manière telle que la lumière émise (26, 27) soit modulée, l'installation de commande (20, 24) transmettant des messages par la modulation de la lumière (26, 27), et
l'appareil de commande (10) disposant d'un récepteur (13), d'une installation de traitement (12) et d'un émetteur (11), le récepteur (13) recevant la lumière modulée (26, 27) du dispositif d'éclairage (19, 23) et l'installation de traitement (12) traitant les messages contenus dans la modulation de la lumière (26, 27), et
l'installation de traitement (12) générant des signaux de commande et l'émetteur (11) envoyant ceux-ci au moins indirectement par le biais du système de bus (30) au dispositif d'éclairage (19, 23),
**caractérisé en ce**
**que**, les informations contenues dans la modulation de la lumière (26, 27), correspondent à un signal de reconnaissance en retour en réponse aux signaux de commande.

2. Système d'éclairage selon la revendication 1,
**caractérisé en ce**
**que** les signaux de commande générés par l'installation de traitement (12) sont des interrogations d'état ou des signaux de configuration et les informations contenues dans la modulation de la lumière (26, 27) sont des messages d'état en réponse aux interrogations d'état et/ou des messages servant à la confirmation des signaux de commande reçus et/ou des messages de configuration en réponse aux signaux de configuration.

3. Système d'éclairage selon l'une quelconque des revendications 1 au 2, **caractérisé en ce**
**que** le signal de commande est une assignation d'une adresse de fonctionnement.

4. Système d'éclairage selon l'une quelconque des revendications 1 à 3, **caractérisé en ce**
**que** la modulation de la lumière (26, 27) émise est une modulation d'amplitude ou une modulation de fréquence ou une modulation d'impulsions en largeur.

5. Système d'éclairage selon l'une quelconque des revendications 1 à 4, **caractérisé en ce**
**que** l'émetteur (11) de l'appareil de commande (10) est relié au système de bus (30) par le biais d'une liaison par câble ou par le biais d'une liaison radioélectrique (22) ou par le biais d'une liaison infrarouge.

6. Système d'éclairage selon l'une quelconque des revendications 1 à 5, **caractérisé en ce**
**que** le système d'éclairage comprend plusieurs dispositifs d'éclairage (19, 23), et
**que** la modulation de la lumière (26, 27) contient des informations qui indiquent le dispositif d'éclairage (19, 23) qui a émis la lumière.

7. Système d'éclairage selon la revendication 6,
**caractérisé en ce**
**que** le récepteur (13) de l'appareil de commande (10) présente une caractéristique directive et que le récepteur (13), lorsqu'il est dirigé vers un des dispositifs d'éclairage (19, 23), reçoit en grande partie uniquement la lumière (26, 27) émise par ce dispositif d'éclairage (19, 23).

8. Procédé de commande de systèmes d'éclairage,
le système d'éclairage disposant au moins d'un dispositif d'éclairage (19, 23), d'un appareil de commande (10) et d'un système de bus (30) unidirectionnel, des signaux de commande étant transmis par l'appareil de commande (10) par le biais du système de bus (30) au dispositif d'éclairage (19, 23),
les signaux de commande étant reçus et traités par le dispositif d'éclairage (19, 23),
une lumière modulée (26, 27) étant émise par le dispositif d'éclairage (19, 23), et
la modulation de la lumière (26, 27) contenant des messages,
la lumière modulée (26, 27) étant reçue par l'appareil de commande (10) et les messages étant traités par l'appareil de commande (10),
**caractérisé en ce**
**que**, les informations contenues dans la modulation de la lumière (26, 27), correspondant à un signal de reconnaissance en réponse aux signaux de commande.

9. Procédé selon la revendication 8,
**caractérisé en ce**
**que** les signaux de commande générés sont des interrogations d'état ou des signaux de configuration et que les informations contenues dans la modulation de la lumière (26, 27) sont des messages d'état en réponse aux interrogations d'état et/ou des messages servant à la confirmation des signaux de commande reçus et/ou des messages de configuration en réponse aux signaux de configuration.

10. Procédé selon l'une quelconque des revendications 8 ou 9,
**caractérisé en ce**
**que** le signal de commande est une assignation d'une adresse de fonctionnement.

11. Procédé selon l'une quelconque des revendications 8 à 10,
**caractérisé en ce**
**que** le système d'éclairage comprend plusieurs dispositifs d'éclairage (19, 23),
**que** l'appareil de commande (10) est dirigé vers un dispositif d'éclairage (19, 23) à commander,
**que** l'appareil de commande (10) reçoit en grande partie uniquement la lumière (26, 27) émise par ce dispositif d'éclairage (19, 23), et
**que** l'appareil de commande (10) commande exclusivement le dispositif d'éclairage (19, 23) sur lequel il est dirigé.

12. Procédé selon l'une quelconque des revendications 8 à 11,
**caractérisé en ce**
**que** le système d'éclairage comprend plusieurs dispositifs d'éclairage (19, 23), et
**que** la modulation de la lumière (26, 27) contient des informations qui indiquent le dispositif d'éclairage (19, 23) qui a émis la lumière.
